Europäisches Patentamt

European Patent Office

Office européen des brevets

(19)

(11) Publication number: **0 112 455**
A2

# (12) EUROPEAN PATENT APPLICATION

(21) Application number: 83110531.7

(22) Date of filing: 21.10.83

(51) Int. Cl.³: **G 02 B 7/26**

(30) Priority: 27.12.82 US 453242

(43) Date of publication of application: 04.07.84
Bulletin 84/27

(84) Designated Contracting States: **BE DE FR GB SE**

(71) Applicant: **GTE Products Corporation, 100 West 10th Street, Wilmington, DE 19801 (US)**

(72) Inventor: **Graham, Lynette, 318 N. Kerr Street, Titusville, PA (US)**

(74) Representative: **Reinländer & Bernhardt Patentanwälte, Orthstrasse 12, D-8000 München 60 (DE)**

(54) Box assembly for fiber optic multiplexer/duplexer.

(57) A box assembly for enclosing and retaining an optical multiplexer (duplexer), the multiplexer (duplexer) comprising a plurality of expanded beam lens assemblies, associated normal-incidence bandpass optical filters, and a dichroic beamsplitter. The box assembly includes a plurality of clamps maintained in a substantially fixed relationship by virtue of clips inserted into and through flangelike portions extending at the ends of clamps. A pair of brackets inserted into the enclosure defined by the clamps operate to secure the dichroic beamsplitter. Gauge pins, fitting into notches cut out of the ends of the brackets, facilitate the insertion and retention of the beamsplitter. A pair of filter retainers, exhibiting a contours complimentary to the contours of the brackets are positioned in abutment with the brackets so as to properly align the normal-incidence filters with the lens assemblies. A lid is provided to cover the enclosure defined by the brackets.

)-24,690          BOX ASSEMBLY FOR FIBER OPTIC MULTIPLEXER/DUPLEXER

TECHNICAL FIELD

The invention relates to the implementation of optical communication systems via glass fiber waveguides and, more particularly, to an apparatus for housing an optical multiplexer/duplexer, the multiplexer/duplexer including, inter alia, a plurality of expanded beam lens connector assemblies, associated normal-incidence bandpass filters, and a dichroic beamsplitter.

BACKGROUND OF THE INVENTION

As has become widely appreciated, optical communication systems are especially attractive because of the low loss, wide bandwidth and relative immunity to electrical noise by which they are characterized. However, as with any communication system, be it intended for tactical, business, entertainment, or educational purposes, a paramount consideration is the amount of information which the system is capable of processing. To this end, both frequency and time division multiplexing techniques have long been utilized.

Unfortunately, even though fiber optic communication systems have appeared otherwise attractive, they have not heretofore proven themselves readily amenable to standard multiplexing techniques. A primary reason is that, even though the glass fiber is electromagnetically capable of transmitting information at rates and densities desired, the physical impediments presented by the glass medium have largely been largely unassailable. In particular, it has

*Reg* 12-22-82

- 2 -

heretofore appeared prohibitively difficult to couple signals from more than one optical source onto a single glass fiber. If unattended such a shortcoming would constitute a serious limitation in a otherwise impressive medium for the transmission of information.

Accordingly, U.S. Patent Applications entitle "Optical Multiplex System" and "Optical Duplexing System", Attorney's Docket Numbers D-24,531 and D-24,673 respectively, by Donald M. Fye and filed on November 4, 1982, are directed to apparatus for combining and transmitting, in either the same direction or opposite directions, information from at least two disparate optical sources. The system comprises three, two input and one output, expanded beam lens assemblies. The lens assemblies include a body molded from an optical quality plastic and are characterized by an expanded beam lens at one end and a cylindrical cavity at another. The lens includes a convex surface molded into the body and recessed from a reference surface. A second surface, parallel to the reference surface, has a point displaced one focal length from the lens so as to form a focal plane for the lens. A complete description of the lens is provided in U.S.Patent Application Serial Number 112,991, by W. John Carlsen, filed on January 17, 1980 and entitled "Optical Fiber Connectors".

An elastomeric cable holder, designed to accommodate a glass fiber, is positioned in the body of the molded plastic part. An example of such a holder is described in U.S.Patent 4,257,674, "Elastomeric Fiber Splice" by Griffin et al. Suffice to say that the holder exhibits an axial hole through which a glass fiber may be inserted for abutment to the second surface of the plastic part.

12-22-82

- 3 -

Normal-incidence bandpass filter are positioned in front of the lens portion of two of the assemblies.  A dichroic beamsplitting mirror is positioned intermediate and at a 45° angle to the three lens assemblies so that light emanating from glass fibers inserted into the input assemblies is collinated by the expanded beam lenses, caused to pass through normal-incidence filters appropriately either transmitted through or reflected by the beamsplitter, converged by the output lens assembly and combined onto a single fiber optic link.

The subject invention is directed to an apparatus suitable for housing and maintaining the necessary physical arrangement among the various components of the multiplexer/duplexer systems described above.

DISCLOSURE OF THE INVENTION

The invention is a box assembly for an optical multiplex and/or duplex system, the system including a plurality of expanded beam lens assemblies, associated normal-incidence optical filters, and a dichroic beamsplitter.

The box assembly includes a plurality of clamp members , each characterized by a central portion and flangelike portions extending outwardly from the central portion.  Clips are utilized to secure and maintain the clamp members in a substantially fixed relationship so as to define an enclosure.  In an exemplified embodiment the enclosures may be seen as having a rectangular perimeter.  A pair of bracket members, adapted for insertion into the enclosure formed by the clamp members, provide a mechanism for the retention of

*Leg 12-22-82*

the dichroic beamsplitter. Retaining members, having contours complimentary to abutting contours of the bracket members, retain the normal incidence filter and maintain the filters in alignment with lens assemblies. A lid for covering the enclosure an apparatus included therein, may also be provided.

## BRIEF DESCRIPTION OF THE DRAWINGS

Figures A and B are top and sides views, respectively, of the subject box assembly, including pertinent portions of the multiplex (duplex) system.

## DESCRIPTION OF A PREFERRED EMBODIMENT

The above and other objects, advantages, and capabilities are acheived by a box assembly for an optical multiplex/duplex system.

As depicted in Figure A, a top view, a preferred configuration of the subject box assembly comprise four unitary clamps 10, each characterized by a central portion 11 and flangelike portions 12 extending from the ends of the central portion so as to form an obtuse angle of approximately 135 degrees with the central portion. The individual clamp members are secured in a fixed relationship via (threaded?) clips 20 inserted into and through contiguous flangelike portions so as to form a substantially rectangular enclosure. Although Figures A and B depicts what is deemed to be a preferred implementation of the clip 20, it is clear that structurally variant, yet functionally equivalent, clips may be substituted without departure from this invention. The central portions of the clamps exhibit mounting apertures for the insertion and support of the expanded beam lens assemblies 1 alluded to above. The monitoring apertues may be more clearly seen in Figure B, a side view.

A pair of brackets 30 of a substantially L-shaped configuration are positioned in diametrically opposing corners of the inclosure so that the legs 31 of the brackets are contiguous, or nearly so, to the central portion of the associated clamps. The ends of the brackets exhibit notches cut out of the inside corners so as to accomodate gauge pins 40 inserted therein. The gauge pins facilitate the insertion and retention of the dichroic beamsplitter 2.

Also included in the inclosure are a pair of retainers 50 having contours complementary to the contours of the brackets so that the retainers may be placed in abutment with the brackets. In the box assembly embodiment depicted in Figures A and B, the inside corner formed by the respective legs of the L-shaped brackets is filled-in and the outside corner of the otherwise generally L-shpaed retainer is truncated so that the contours of the two parts complement each other. The retainers are adapted for the retention of at least three normal-incidence bandpass optical filters 3.

Finally the box assembly may also include a lid 60 covering and protecting the multiplexer/duplexer components and associated hardware enclosed within the perimeter defined by the four clamps.

12-22-82

- 6 -

The components of the box assembly, described above, cooperate in the following fashion. Each of the brackets is characterized by two references surfaces and two apertures so as to accomodate two expanded beam (or, as they may alternatively referred to, telecentric) lens assemblies. The brackets position the lens assemblies so that they exhibit an orthogonal relationships with respect to each other. Orthogonality is maintained by bolting the filter retainers and filters in place and abutting the lens assemblies against them. Gauge pins of varying diameters are provided so as to compensate for dimensional tolerances of other components. By selecting gauge pins of appropriate diameters, an assembler is able to position the beamsplitter at the correct distance from and angle relative to the lens assemblies in fashion tending to maximize the optical throughput of the system.

The clamps are utilized to encapsulate the above components and to maintain an integrally fixed relationship between them. The clamps are held in place by the clips so as to linearly secure the box. A printed circuit board and the lid may sandwich the box, thereby completing the assembly.

In summary, the box assembly disclosed herein includes a plurality of clamps (four are shown but a configuration consisting of merely two clamps is easily conceived) defining an enclosure into the perimeter which the requisite lens assemblies may be mounted, supported, and accurately position. The dichroic beamsplitter is similarly precisely positioned through the operation of the brackets and gauge pins. The retainers properly align the normal-incidence filter with both the lens assemblies and beamsplitter.

0112455

- 7 -

Accordingly, while there has been shown and described what is at present considered to be the preferred embodiment of a box assembly for an optical multiplex and/or duplex system, it will be obvious to one having ordinary skill in the art that various changes and modifications can be made therein without departing from the scope of the invention as defined by the appended claims.

INDUSTRIAL APPLICABILITY

The subject ivention is useful in the implementation of communication and information delivery system effected via glass fiber waveguides.

12-22-82

WHAT IS CLAIMED IS:

1.   A box assembly for an optical multiplex/duplex system, the assembly comprising:

a plurality of clamp members, each comprising a central portion and a pair of flangelike portions extending from the ends of the central portion;

a plurality of clip members for securing the clamp members in a substantially fixed relationship so as to form an enclosure;

a pair of bracket members adapted for insertion into the enclosure formed by the clamp members for retention of a dichroic beamsplitter;

a pair of retaining members having contours complementary to contours of the bracket member and adapted for abutment to the bracket members and for retaining a plurality of optical filters.

2.   A box assembly as defined in Claim 1 wherein the central portions of the clamp members exhibit apertures for the insertion of lens assemblies.

3. A box assembly as defined in Claim 2 wherein the apertures exhibited by the central portions of the clamp members are characterized by a subatantially circular profile.

4. A box assembly as defined in Claim 3 wherein the flangelike portions of each of the clamp members form an obtuse angle with the resepctive central portion.

5. A box assembly as defined in Claim 4 wherein the obtuse angle is approximately 135 degrees.

6. A box assembly as defined in Claim 5 further comprising a lid for covering the enclosure formed by the clamp members.

7. A box assembly as defined in Claim 1 wherein the flangelike portions of the clamp members exhibit apertures for the insertion of the clip members.

8. A box assembly as defined in Claim 7 further comprising a lid for covering the enclosure formed by the clamp members.

9. A box assembly as defined in Claim 1 wherein the bracket members are substantially L-shaped.

10. A box assembly as defined in Claim 9 wherein the ends of bracket members exhibit notches.

11. A box assembly as defined in Claim 10 further comprising a plurality of gauge pins inserted into the notches exhibited by the bracket members so as to facilitate insertion and retention of the dichroic beamsplitter.

12. A box assembly as defined in Claim 9 wherein each of the bracket members has a partially filled-in inner corner and a truncated outer corner.

13. A box assembly as defined in Claim 12 further comprising a lid for covering the enclosure formed by the clamp members.

14. A box assembly for an optical multplexer and/or duplexer that includes a plurality of lens assemblies, associated optical filters, and a dichroic beamsplitter, the assembly comprising:

perimeter means for supporting the lens assemblies and providing an enclosure for the optical filters and beamsplitter;

bracket means located within the perimeter means for accurately positioning the beamsplitter within the enclosure,

retaining means in substantial abutment to the bracket means, and chracterized by a contour complimentary to a contour of the bracket means, said retaining means for accurately positioning the optical filters with respect to the lens assemblies and beamsplitter.

15. A box assembly as defined in Claim 14 wherein the perimeter means is comprised of a plurality of clamps, the clamps chracterized by a central portion and by flangelike portions extending obtusely from ends of the central portions, and a plurality of clips for mounting the clamp in fixed relationship to each other so as to define the enclosure.

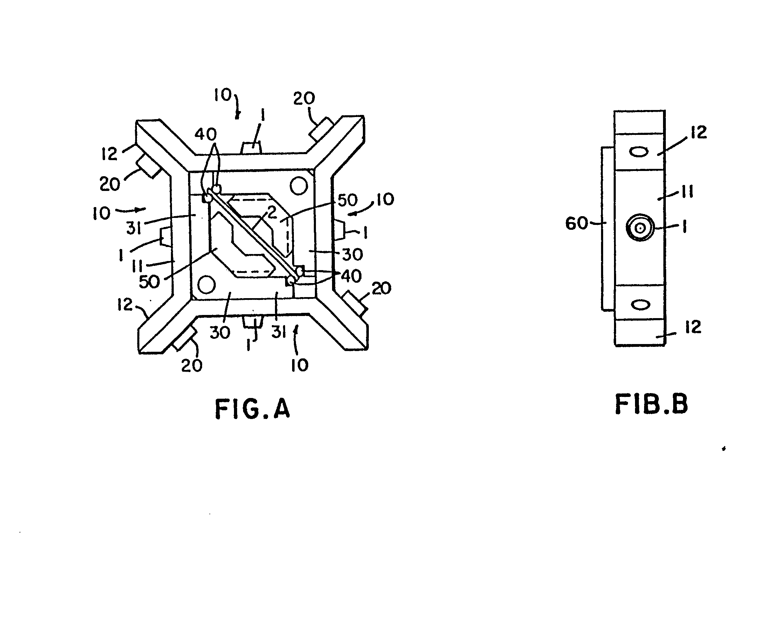

16.  A box assembly as defined in Claim 15 wherein the bracket means comprises a pair of diametrically positioned L-shaped sections exhibiting notches at the ends thereof, said bracket means further comprising a plurality of gauge pins positioned in the notches of the L-shaped sections so as to facilitate insertion and retention of the dichroic beam-splitter.

**FIG.A**

**FIB.B**